(19) **Europäisches Patentamt European Patent Office Office européen des brevets**

(11) **EP 4 763 305 A1**

(12) **EUROPEAN PATENT APPLICATION**
published in accordance with Art. 153(4) EPC

(43) Date of publication:
**24.06.2026 Bulletin 2026/26**

(51) International Patent Classification (IPC):
**B01D 21/32** (2006.01)  **B01D 21/01** (2006.01)
**C02F 1/52** (2023.01)

(21) Application number: **24939054.3**

(22) Date of filing: **30.09.2024**

(86) International application number:
**PCT/CN2024/122775**

(87) International publication number:
**WO 2026/065406 (02.04.2026 Gazette 2026/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **GEM Co., Ltd.**
**Bao'an Center Area,**
**Bao'an, Shenzhen**
**Guangdong 518101 (CN)**
• **PT Green Eco Nickel**
**Jakarta Selatan, Provinsi DKI Jakarta, 12950 (ID)**

• **PT ESG New Energy Material**
**Jakarta Selatan, Provinsi DKI Jakarta 12950 (ID)**
• **PT QMB New Energy Materials**
**Jakarta Selatan, Provinsi DKI Jakarta, 12950 (ID)**

(72) Inventors:
• **XU, Kaihua**
**Shenzhen, Guangdong 518100 (CN)**
• **AJI, Tegar Mukti**
**Jakarta Selatan, Provinsi DKI Jakarta 12950 (ID)**
• **HASIBUAN, Andi Syaputra**
**Jakarta Selatan, Provinsi DKI Jakarta 12950 (ID)**
• **WANALDI, Rizky**
**Jakarta Selatan, Provinsi DKI Jakarta 12950 (ID)**

(74) Representative: **Tiburzi, Andrea et al**
**Barzanò & Zanardo Roma S.p.A.**
**Via Piemonte 26**
**00187 Roma (IT)**

(54) **AGGLOMERATION-THEORY-BASED FLOCCULATION CONTROL METHOD AND APPARATUS, AND ELECTRONIC DEVICE AND MEDIUM**

(57) Provided are a flocculation control method and apparatus based on agglomeration theory, an electronic device, and a medium. The flocculation control method includes the following: the feed volumetric concentration and the liquid phase viscosity of a thickener are acquired, and a ratio of volume of flocs containing bound water to volume of all flocs is determined based on feed volumetric concentration; current floc settling velocity in the thickener is determined based on the feed volumetric concentration, the ratio of the volume of the flocs containing bound water to the volume of all the flocs, and the liquid phase viscosity; target floc settling velocity is determined based on feed volumetric concentration, underflow volumetric concentration of the thickener, and solid flux per unit area per unit time; and in response to current floc settling velocity being less than N times target floc settling velocity, the feed volumetric concentration of the thickener, the additive amount of a flocculant, or the agitation rate is adjusted, where N > 1. Accurate control can be performed on flocculation agglomeration and the settling process in combination with the feed volumetric concentration of the thickener, the additive amount of the flocculant, or the agitation rate, providing guidance and basis for achieving the optimal agglomeration effect.

Acquire the feed volumetric concentration of a thickener and the liquid phase viscosity of the thickener, and determine a ratio of the volume of flocs containing bound water to the volume of all flocs based on the feed volumetric concentration — S101

Determine the current floc settling velocity in the thickener based on the feed volumetric concentration, the ratio of the volume of the flocs containing bound water to the volume of all the flocs, and the liquid phase viscosity — S102

Determine target floc settling velocity based on the feed volumetric concentration, the underflow volumetric concentration of the thickener, and the solid flux per unit area per unit time — S103

In response to the current floc settling velocity less than N times the target settling velocity, adjust the feed volumetric concentration of the thickener, the additive amount of a flocculant, or the agitation rate to adjust the floc settling velocity to be more than N times the target settling velocity — S104

**FIG. 1**

EP 4 763 305 A1

**Description**

TECHNICAL FIELD

The present application relates to the technical field of solid-liquid separation in hydrometallurgy and, in particular, to a flocculation control method and apparatus based on agglomeration theory, an electronic device, and a medium.

BACKGROUND

In the fields of mineral processing, metallurgy, water treatment and the like, solid-liquid separation is often involved and, in particular, solid-liquid separation is performed by using a large thickener. In the process, solid particles, flocculants, filter aids, and other auxiliary agents collide with and contact each other to form agglomerates, thereby accelerating the settling and separation of materials.

In order to implement efficient solid-liquid separation, the agglomeration process must be regulated and controlled. The mechanism affecting agglomeration and solid-liquid separation needs to be studied clearly, thereby better guiding production. The action modes of different flocculants and different material particles are different, thereby generating different flocculation agglomeration mechanisms. Generally, the flocculation agglomeration mechanisms can be divided into four types: electro-neutralization, electrostatic clustering, adhesive bridging. Moreover, more than one flocculation mechanism is often used in most agglomeration systems, which is usually a result of multiple mechanisms acting together. Therefore, how to scientifically and reasonably understand the agglomeration process is the key to implementing solid-liquid separation in hydrometallurgy.

In actual production, many factors affect flocculation agglomeration. Since flocculation agglomeration is the core affecting material settling, production efficiency and product quality may be seriously affected if the settling process is not dealt with appropriately. Therefore, how to accurately control flocculation agglomeration and the settling process is a key issue.

SUMMARY

In this regard, it is necessary to provide a flocculation control method and apparatus based on agglomeration theory, an electronic device, and a medium to accurately control flocculation agglomeration and the settling process, providing guidance and basis for achieving the optimal agglomeration effect.

In order to solve the preceding problem, in one aspect, the present application provides a flocculation control method based on agglomeration theory. The flocculation control method includes the following.

Feed volumetric concentration of a thickener and liquid phase viscosity of the thickener are acquired, and a ratio of a volume of flocs containing bound water to a volume of all flocs is determined based on the feed volumetric concentration.

Current floc settling velocity in the thickener is determined based on the feed volumetric concentration, the ratio of the volume of the flocs containing bound water to the volume of all the flocs, and the liquid phase viscosity.

Target floc settling velocity is determined based on the feed volumetric concentration, underflow volumetric concentration of the thickener, and solid flux per unit area per unit time.

In response to the current floc settling velocity being less than N times the target floc settling velocity, the feed volumetric concentration of the thickener, an additive amount of a flocculant, or an agitation rate is adjusted to adjust the floc settling velocity to be more than N times the target floc settling velocity, where N > 1.

In a possible embodiment, that the ratio of the volume of the flocs containing bound water to the volume of all the flocs is determined based on the feed volumetric concentration includes the following.

The feed volumetric concentration is substituted into a preset quadratic fitting polynomial to obtain the ratio of the volume of the flocs containing bound water to the volume of all the flocs.

Here an independent variable in the quadratic fitting polynomial is the feed volumetric concentration, and a dependent variable is the ratio of the volume of the flocs containing bound water to the volume of all the flocs.

In a possible embodiment, that the current floc settling velocity in the thickener is determined based on the feed volumetric concentration, the ratio of the volume of the flocs containing bound water to the volume of all the flocs, and the liquid phase viscosity includes the following.

The current floc settling velocity in the thickener is determined based on the feed volumetric concentration, the ratio of the volume of the flocs containing bound water to the volume of all the flocs, the liquid phase viscosity, a floc density, and a floc characteristic diameter.

In a possible embodiment, a calculation formula of the current floc settling velocity in the thickener is as below.

$$v_s = (1 - \gamma C_1)^{\frac{\gamma-3}{\gamma^2}} \frac{(\rho_2 - \rho_1)}{18\eta} g d^2.$$

Here $\rho_2$ denotes the floc density, $\rho_1$ denotes density of a liquid phase, $d$ denotes the floc characteristic diameter, $\eta$ denotes the liquid phase viscosity, g denotes acceleration of gravity, $v_s$ denotes the current floc settling velocity in the thickener, $\gamma$ denotes the ratio of the volume of the flocs containing bound water to the volume of all the flocs, and $C_1$ denotes the feed volumetric concentration.

In a possible embodiment, a calculation formula of the target floc settling velocity is as below.

$$v_n = (\frac{1}{C_1} - \frac{1}{C_2})Q.$$

Here $Q$ denotes the solid flux per unit area per unit time, $C_1$ denotes the feed volumetric concentration, $C_2$ denotes the underflow volumetric concentration, and $v_n$ denotes the target floc settling velocity.

In a possible embodiment, that in response to the current floc settling velocity being less than N times the target floc settling velocity, the feed volumetric concentration of the thickener, the additive amount of the flocculant, or the agitation rate is adjusted includes the following.

In response to the underflow volumetric concentration being greater than target underflow volumetric concentration and the current floc settling velocity being less than N times the target floc settling velocity, an adjustment of reducing the feed volumetric concentration, increasing the additive amount of the flocculant, or increasing the agitation rate is performed on the thickener.

In a possible embodiment, that in response to the current floc settling velocity being less than N times the target floc settling velocity, the feed volumetric concentration of the thickener, the additive amount of the flocculant, or the agitation rate is adjusted further includes the following.

In response to the underflow volumetric concentration being less than or equal to the target underflow volumetric concentration and the current floc settling velocity being less than N times the target floc settling velocity, an adjustment of increasing the additive amount of the flocculant or increasing the agitation rate is performed on the thickener.

In another aspect, the present application further provides a flocculation control apparatus. The flocculation control apparatus includes a flocculant dosage calculation module, a floc settling velocity calculation module, a target floc settling velocity determination module, and a parameter adjustment module.

The flocculant dosage calculation module is configured to acquire feed volumetric concentration of a thickener and liquid phase viscosity of the thickener and determine a ratio of a volume of flocs containing bound water to a volume of all flocs based on the feed volumetric concentration.

The floc settling velocity calculation module is configured to determine current floc settling velocity in the thickener based on the feed volumetric concentration, the ratio of the volume of the flocs containing bound water to the volume of all the flocs, and the liquid phase viscosity.

The target floc settling velocity determination module is configured to determine target floc settling velocity based on the feed volumetric concentration, underflow volumetric concentration of the thickener, and solid flux per unit area per unit time.

The parameter adjustment module is configured to, in response to the current floc settling velocity being less than N times the target floc settling velocity, adjust the feed volumetric concentration of the thickener, an additive amount of a flocculant, or an agitation rate to adjust the floc settling velocity to be more than N times the target floc settling velocity, where N > 1.

In another aspect, the present application further provides an electronic device. The electronic device includes a memory and a processor.

The memory is configured to store instructions.

The processor is coupled with the memory and configured to execute the instructions stored in the memory to perform steps of any preceding flocculation control method based on agglomeration theory.

In another aspect, the present application further provides a non-transitory computer-readable storage medium for storing computer instructions. When the computer instructions are executed by a processor, steps of any preceding flocculation control method based on agglomeration theory are performed.

The preceding embodiments have the following beneficial effects: According to the flocculation control method and apparatus based on agglomeration theory, the electronic device, and the medium provided in the present application, the current floc settling velocity in the thickener is determined based on the feed volumetric concentration of the thickener, the ratio of the volume of the flocs containing bound water to the volume of all the flocs, and the liquid phase viscosity; the target floc settling velocity is determined based on the feed volumetric concentration, the underflow volumetric concentration of the thickener, and the solid flux per unit area per unit time; it is determined in combination with the current floc settling velocity and the target floc settling velocity whether the actual settling velocity currently meets requirements; if the actual settling velocity currently meets requirements, it indicates that slurry has a relatively sound flocculation settling effect; if the actual settling velocity currently does not meet requirements, it indicates that the actual settling effect is not good, and the feed volumetric concentration of the thickener, the additive amount of the flocculant, or the agitation rate needs to be adjusted so that the relationship between the adjusted actual settling velocity and the target floc settling velocity meets requirements; and therefore, flocculation agglomeration and the settling process can be accurately regulated and controlled in combination with the feed volumetric concentration of the thickener, the additive amount of the flocculant, or the agitation rate in the present application, providing guidance and basis for achieving the optimal agglomeration effect.

BRIEF DESCRIPTION OF DRAWINGS

To illustrate technical solutions in embodiments of the present application more clearly, drawings used in the description of the embodiments are briefly described below. Apparently, the drawings described below illustrate only part of the embodiments of the present application, and those skilled in the art may obtain other drawings based on the drawings described below on the premise that no creative work is done.

FIG. 1 is a flowchart of a flocculation control method based on agglomeration theory according to an embodiment of the present application.

FIG. 2 is a functional block diagram of a flocculation control apparatus according to an embodiment of the present application.

FIG. 3 is a structural diagram of an electronic device according to an embodiment of the present application.

DETAILED DESCRIPTION

Technical solutions in embodiments of the present application will be described clearly and completely in conjunction with drawings in the embodiments of the present application. Apparently, the described embodiments are merely part, not all, of the embodiments of the present application. Based on the embodiments of the present application, all other embodiments obtained by those skilled in the art without creative work are within the scope of the present application.

In the description of the embodiments of the present application, unless otherwise specified, "multiple" means two or more.

In addition, the terms "including", "having", and any variations in the embodiments of the present application are intended to encompass a non-exclusive inclusion. For example, a process, method, apparatus, product, or device that includes a series of steps or modules not only includes the expressly listed steps or modules but may also include other steps or modules that are not expressly listed or are inherent to such a process, method, product, or device.

The naming or numbering of steps in the embodiments of the present application does not mean that steps in the flocculation control method flow must be executed according to the time/logical sequence indicated by the naming or numbering. The execution order of the named or numbered flow steps may be changed according to the technical object to be achieved, as long as the same or similar technical effects can be achieved.

"Embodiment" mentioned throughout the article means that a particular feature, structure or characteristic described in the embodiments is included in at least one embodiment of the present application. This phrase occurred in various locations in the specification is not necessarily to refer to a same embodiment, nor is an independent or alternative embodiment that is mutually exclusive from other embodiments. It is explicitly and implicitly appreciated by those skilled in the art that embodiments described herein may be combined with other embodiments.

The present application provides a flocculation control method and apparatus based on agglomeration theory, an electronic device, and a medium which are described separately hereinafter.

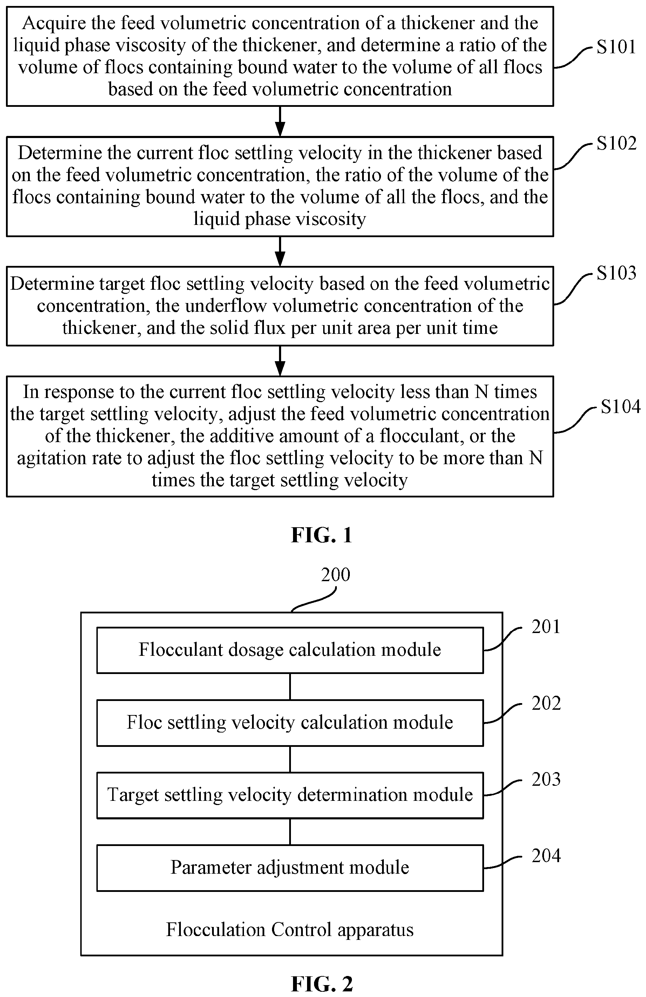

As shown in FIG. 1, the present application provides a flocculation control method based on agglomeration theory. The flocculation control method includes the following.

In S101, the feed volumetric concentration of a thickener and the liquid phase viscosity of the thickener are acquired, and a ratio of the volume of flocs containing bound water to the volume of all flocs is determined based on the feed volumetric concentration.

In S102, the current floc settling velocity in the thickener is determined based on the feed volumetric concentration, the ratio of the volume of the flocs containing bound water to the volume of all the flocs, and the liquid phase viscosity.

In S103, target floc settling velocity is determined based on the feed volumetric concentration, the underflow volumetric concentration of the thickener, and the solid flux per unit area per unit time.

In S104, in response to the current floc settling velocity being less than N times the target floc settling velocity, the feed volumetric concentration of the thickener, the additive amount of a flocculant, or the agitation rate is adjusted to adjust the floc settling velocity to be more than N times the target floc settling velocity, where N > 1.

It is to be understood that N = 1.1 in this embodiment. The feed volumetric concentration of the thickener specifically refers to the volume concentration of slurry solid particles entering the thickener.

According to the flocculation control method provided in the present application, the agglomeration forming process and agglomerate settling performance are used as research objects. A flocculated agglomerate is called a floc for short. The floc settling velocity is a key parameter for implementing rapid solid-liquid separation. In fact, an object of flocculation is to improve the settling velocity.

According to the present application, the current floc settling velocity in the thickener is determined based on the feed volumetric concentration of the thickener, the ratio of the volume of the flocs containing bound water to the volume of all the flocs, and the liquid phase viscosity; the target floc settling velocity is determined based on the feed volumetric concentration, the underflow volumetric concentration of the thickener, and the solid flux per unit area per unit time; it is determined in combination with the current floc settling velocity and the target floc settling velocity whether the actual settling velocity currently meets requirements; if the actual settling velocity currently meets requirements, it indicates that slurry has a relatively sound flocculation settling effect; if the actual settling velocity currently does not meet requirements, it indicates that the actual settling effect is not good, and the feed volumetric concentration of the thickener, the additive amount of the flocculant, or the agitation rate needs to be adjusted so that the relationship between the adjusted actual settling velocity and the target floc settling velocity meets requirements; and therefore, flocculation agglomeration and the settling process can be accurately regulated and controlled in combination with the feed volumetric concentration of the thickener, the additive amount of the flocculant, or the agitation rate in the present application, providing guidance and basis for achieving the optimal agglomeration effect.

In some embodiments, that the current floc settling velocity in the thickener is determined based on the feed volumetric concentration, the ratio of the volume of the flocs containing bound water to the volume of all the flocs, and the liquid phase viscosity includes the following.

The current floc settling velocity in the thickener is determined based on the feed volumetric concentration, the ratio of the volume of the flocs containing bound water to the volume of all the flocs, the liquid phase viscosity, the floc density, and the floc characteristic diameter.

In some embodiments, the calculation formula of the current floc settling velocity in the thickener is as below.

$$v_s = (1 - \gamma C_1)^{\frac{\gamma-3}{\gamma^2}} \frac{(\rho_2 - \rho_1)}{18\eta} g d^2 \quad (1)$$

Here $\rho_2$ denotes floc density. $\rho_1$ denotes the density of a liquid phase. $d$ denotes the floc characteristic diameter. $\eta$ denotes the liquid phase viscosity. g denotes the acceleration of gravity. $v_s$ denotes the current floc settling velocity in the thickener. $\gamma$ denotes the ratio of the volume of the flocs containing bound water to the volume of all the flocs. $C_1$ denotes the feed volumetric concentration.

For material particles, the concentration C of the adsorbable flocculant on the surface is proportional to the flocculation efficiency of the material particles. That is to say, the greater the concentration of the adsorbable flocculant, the larger the size of the formed flocs. Therefore, the characteristic diameter d of the floc is proportional to the flocculation efficiency. That is:

$$d = \left( A * \frac{kC}{1+kC} + 1 \right) d_0.$$

Here A denotes a proportional coefficient. C denotes the concentration of the flocculant in the liquid phase. $k$ denotes an adsorption parameter. $d_0$ denotes the average particle diameter of a solid material before flocculation. The values of $A$ and $k$ are related to the characteristic of the material and the characteristic of the flocculant. When the type of the material and the type of the flocculant are fixed, the values of $A$ and $k$ are also fixed and may be measured experimentally.

When the values of $A$ and $k$ are obtained by specific measurement, multiple pieces (at least two pieces) of to-be-settled slurry may be set, to which different doses of the flocculant may be added respectively. The average particle diameter of the solid material before adding the flocculant to the to-be-settled slurry and the floc characteristic diameter after flocculation are detected. The values of $A$ and $k$ corresponding to the to-be-settled slurry (material) and the flocculant may be calculated by establishing a system of equations. It is to be understood that in practical application, a comparison table of the values of $A$ and $k$ for different types of materials and flocculants may be established to facilitate self-call during flocculation control.

In some embodiments, that the ratio of the volume of the flocs containing bound water to the volume of all the flocs is determined based on the feed volumetric concentration includes the following.

The feed volumetric concentration is substituted into a preset quadratic fitting polynomial to obtain the ratio of the volume of the flocs containing bound water to the volume of all the flocs.

Here an independent variable in the quadratic fitting polynomial is the feed volumetric concentration. A dependent variable is the ratio of the volume of the flocs containing bound water to the volume of all the flocs.

It is to be understood that the ratio of the volume of the flocs containing bound water to the volume of all the flocs may be calculated and obtained based on the formula below.

$$\gamma = a_1 C_1^2 + a_2 C_1 + a_3 \quad (2)$$

Here $\gamma$ denotes the ratio of the volume of the flocs containing bound water to the volume of all the flocs. The value of $\gamma$ is determined by the characteristic of the flocculant and the characteristic and concentration of the material. $C_1$ denotes the volume concentration of the solid particles in the slurry (that is, the feed volumetric concentration). That is:

$$C_1 = \frac{\text{the volume of the solid particles}}{\text{the total volume of the slurry}}.$$

a1 to a3 are undetermined coefficients, which are related to the characteristic of the flocculant and the characteristic of the solid particles. When the characteristic of the flocculant and the characteristic of the material are stable, the values of a1 to a3 may be measured experimentally. A lookup table for the values of a1 to a3 may be measured by experiments. Data in the comparison table may be called automatically. That is, the formula is related to initial parameters such as the feed volumetric concentration (density) and viscosity. For a given material, the concentration of the material has a corresponding relationship with the viscosity of the material.

For the relationship between concentration and viscosity, the viscosity formula is as below for a non-Newtonian fluid.

$$\eta = (\alpha_1 + \alpha_2 C_s)\omega^b \quad (3)$$

Herein, $C_s$ denotes the concentration of the flocculant in the liquid phase. $\alpha_1$ and $\alpha_2$ are constants which are related to the characteristic of the flocculant. $\omega$ is the shearing rate which is determined by the agitation rate of the thickener. b is a constant which is related to the characteristic of the fluid (with the value generally between - 0.8 and - 0.9). Therefore, at the specific agitation rate, the liquid phase viscosity may be calculated through the preceding formula.

It can be seen that flocculation agglomeration and settling is a very complex process. In order to guarantee the efficient separation of materials, that is, rapid settling, the process is achieved by regulating and controlling, for example, the feed volumetric concentration, the additive amount of the flocculant, and the agitation rate.

In some embodiments, the calculation formula of the target floc settling velocity is as below.

$$v_n = \left(\frac{1}{C_1} - \frac{1}{C_2}\right)Q \quad (4)$$

Here Q denotes the solid flux per unit area per unit time. $C_1$ denotes the feed volumetric concentration. $C_2$ denotes the underflow volumetric concentration. $v_n$ denotes the target floc settling velocity.

It is to be understood that the requirements of the settling velocity are to satisfy that the thickener performs underflow stably when guaranteeing underflow concentration during the dynamic thickening process. For a given thickener, when underflow is performed stably, the settling velocity satisfies formula (4).

$v_n$ is the settling velocity when underflow is performed stably, that is, the target floc settling velocity. In order to meet underflow quantity and concentration, the feed quantity and underflow quantity should be consistent first. In this case, the minimum settling velocity may be calculated according to the requirements of underflow concentration. Then adjustment is performed according to $v_s \geq 1.1\,v_n$ and in combination with formula (1); that is, feed slurry concentration is reduced, and the dose of the flocculant is increased.

In some embodiments, that in response to the current floc settling velocity being less than N times the target floc settling velocity, the feed volumetric concentration of the thickener, the additive amount of the flocculant, or the agitation rate is adjusted includes the following.

In response to the underflow volumetric concentration being greater than target underflow volumetric concentration and the current floc settling velocity being less than N times the target floc settling velocity, an adjustment of reducing the feed volumetric concentration, increasing the additive amount of the flocculant, or increasing the agitation rate is performed on the thickener.

In some embodiments, that in response to the current floc settling velocity being less than N times the target floc settling velocity, the feed volumetric concentration of the thickener, the additive amount of the flocculant, or the agitation rate is adjusted further includes the following.

In response to the underflow volumetric concentration being less than or equal to the target underflow volumetric concentration and the current floc settling velocity being less than N times the target floc settling velocity, an adjustment of increasing the additive amount of the flocculant or increasing the agitation rate is performed on the thickener.

It is to be noted that when the $v_s$ obtained through formula (1) satisfies that when $v_s \geq 1.1\, v_n$, it indicates that the actual settling velocity meets requirements and that the slurry has a relatively sound flocculation settling effect. Otherwise, it indicates that the actual settling effect is not good and that the dose of the flocculant needs to be increased or the feed slurry concentration needs to be reduced.

However, $v_n$ may also be increased when the feed slurry concentration is reduced, which may not satisfy the target underflow volumetric concentration and the target underflow amount per unit time. Therefore, only when the actual underflow volumetric concentration is greater than the target underflow volumetric concentration, it is possible to perform a control through the manner of reducing the feed slurry concentration.

The present application is verified by the experiments below according to the flocculation control method in the preceding embodiment.

The slurry after laterite nickel ore beneficiation enters the thickener for detection. It is measured that the feed volumetric concentration is 3.9%, that pH is 6.8, and that Zeta potential is 2.36 mV. In this case, nonionic PAM is selected (nonionic PAM from SNF China, a Chinese mainland brand, was used in this experimental embodiment).

In the preceding scenario, the acquired specific parameters are as below:
the current feed volumetric concentration of the thickener which is that $C_1 = 3.9\%$; the liquid phase viscosity which is that $\eta = 8.92 * 10^{-4}\, Pa \cdot s$; the ratio of the volume of the flocs containing bound water to the volume of all the flocs which is that $\gamma = 7.178$; the underflow volumetric concentration of the thickener which is that $C_2 = 17.24\%$; the solid flux per unit area per unit time which is that $Q = 0.0061\, m^3/s$; floc density which is that $\rho_2 = 3.2 * 10^3\, kg/m^3$; and the floc characteristic diameter d which satisfies the formula that $d = \left( A * \dfrac{kC}{1+kC} + 1 \right) d_0$. Here for the relationship between C and $d/d_0$, reference may be made to the following Table 1:

Table 1 The concentration of the flocculant in the liquid phase

| $C$ | $d/d_0$ |
|---|---|
| 0.00001 | 8.69 |
| 0.000015 | 17.56 |

It may be measured by experiments that $A = -12.671$, that $k = -37767.756$, and that $d_0 = 10$ um. In this case, the additive amount of the flocculant is that $C \approx 1.0 * 10^{-5}$. The additive amount of the flocculant is substituted into the preceding formulas to obtain that d = 92.97 um. The preceding measured parameters are substituted into formulas (1) to (4) to obtain the current floc the floc settling velocityculant that $v_s = 11.618$ mm/s and the target floc settling velocity that $v_n = 12.1$ mm/s.

In this embodiment, N = 1.1. In this case, $v_s$ is less than 1.1 times the $v_n$, not meeting requirements. An adjustment is required. In this case, three adjustment manners are provided.

In the first adjustment manner, the feed volumetric concentration of the thickener is reduced. After adjustment, $C_1 = 3.5\%$; $\gamma = 7.270$; $\eta = 8.92 * 10^{-4}\, Pa \cdot s$; $C_2 = 16.34\%$; and $Q = 0.00464\, m^3/s$. It is obtained after adjustment that $v_s = 11.551$ mm/s and that $v_n = 10.427$ mm/s. It satisfies that $v_s$ is greater than 1.1 times the $v_n$.

In the second adjustment manner, the additive amount of the flocculant is increased (so that $C \approx 1.17 * 10^{-5}$). After adjustment, $C_1 = 3.9\%$; $\gamma = 7.178$; $\eta = 1.195 * 10^{-3}\, Pa \cdot s$; $C_2 = 17.24\%$; and $Q = 0.0061\, m^3/s$. It is obtained after adjustment that $v_s = 13.656$ mm/s and that $v_n = 12.1$ mm/s. It satisfies that $v_s$ is greater than 1.1 times the $v_n$.

In the third adjustment manner, the agitation rate of the thickener is increased. After adjustment, $C_1 = 3.9\%$; $\gamma = 7.178$; $\eta = 7.43 * 10^{-4}\, Pa \cdot s$; $C_2 = 17.24\%$; and $Q = 0.0061\, m^3/s$. It is obtained after adjustment that $v_s = 13.582$ mm/s and that $v_n = 12.1$ mm/s. It satisfies that $v_s$ is greater than 1.1 times the $v_n$.

As shown in FIG. 2, the present application further provides a flocculation control apparatus 200. The flocculation control apparatus 200 includes a flocculant dosage calculation module 201, a floc settling velocity calculation module 202, a target floc settling velocity determination module 203, and a parameter adjustment module 204.

The flocculant dosage calculation module 201 is configured to acquire the feed volumetric concentration of a thickener and the liquid phase viscosity of the thickener and determine a ratio of the volume of flocs containing bound water to the volume of all flocs based on the feed volumetric concentration.

The floc settling velocity calculation module 202 is configured to determine the current floc settling velocity in the thickener based on the feed volumetric concentration, the ratio of the volume of the flocs containing bound water to the volume of all the flocs, and the liquid phase viscosity.

The target floc settling velocity determination module 203 is configured to determine target floc settling velocity based on the feed volumetric concentration, the underflow volumetric concentration of the thickener, and the solid flux per unit area per unit time.

The parameter adjustment module 204 is configured to, in response to the current floc settling velocity being less than N times the target floc settling velocity, adjust the feed volumetric concentration of the thickener, the additive amount of a flocculant, or the agitation rate to adjust the floc settling velocity to be more than N times the target floc settling velocity, where N > 1.

The flocculation control apparatus provided in the preceding embodiment can implement the technical solutions described in the preceding embodiment of the flocculation control method based on agglomeration theory. For the specific implementation principle of each module or unit, reference may be made to the corresponding content in the preceding embodiment of the flocculation control method based on agglomeration theory and is repeated herein.

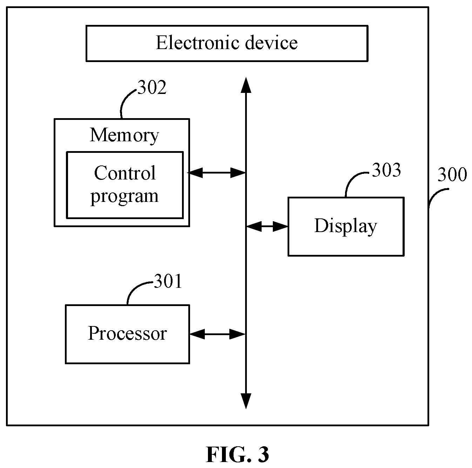

As shown in FIG. 3, the present application further provides an electronic device 300. The electronic device 300 includes a processor 301, a memory 302, and a display 303. FIG. 3 shows merely part of the components of the electronic device 300. However, it is to be understood that it is not required to implement all the shown components, and more or fewer components may be implemented instead.

In some embodiments, the memory 302 may be an internal storage unit of the electronic device 300, such as a hard disk or memory of the electronic device 300. In some other embodiments, the memory 302 may also be an external storage device of the electronic device, such as a plug-in hard disk, a smart media card (SMC), a secure digital (SD) card or a flash card provided on the electronic device 300.

Further, the memory 302 may also include both an internal storage unit of the electronic device 300 and an external storage device of the electronic device 300. The memory 302 is used for storing application software and various types of data for installing the electronic device 300.

In some embodiments, the processor 301 may be a central processing unit (CPU), a microprocessor, or another data processing chip for running instruction codes stored in the memory 302 or processing data, for example, the flocculation control method based on agglomeration theory in the present application.

In some embodiments, the display 303 may be, for example, an LED display, a liquid crystal display, a touch liquid crystal display, or an organic light-emitting diode (OLED) touch. The display 303 is used for displaying the information of the electronic device 300 and displaying a user interface for displaying visualization. Components 301 to 303 of the electronic device 300 may communicate with each other through system buses.

In some embodiments of the present application, when the processor 301 executes the flocculation control instructions in the memory 302, the steps below may be performed.

The feed volumetric concentration of a thickener and the liquid phase viscosity of the thickener are acquired, and a ratio of the volume of flocs containing bound water to the volume of all flocs is determined based on the feed volumetric concentration.

The current floc settling velocity in the thickener is determined based on the feed volumetric concentration, the ratio of the volume of the flocs containing bound water to the volume of all the flocs, and the liquid phase viscosity.

The target floc settling velocity is determined based on the feed volumetric concentration, the underflow volumetric concentration of the thickener, and the solid flux per unit area per unit time.

In response to the current floc settling velocity being less than N times the target floc settling velocity, the feed volumetric concentration of the thickener, the additive amount of a flocculant, or the agitation rate is adjusted to adjust the floc settling velocity to be more than N times the target floc settling velocity, where N > 1.

It is to be understood that when the processor 301 executes the flocculation control instructions in the memory 302, functions apart from the preceding functions may be implemented, which may specifically refer to the description of the preceding corresponding method embodiments.

Further, the type of the electronic device 300 mentioned is not specifically limited in the embodiments of the present application. The electronic device 300 may be a portable electronic device such as a mobile phone, a tablet computer, a personal digital assistant (PDA), a wearable device, or a laptop. An exemplary embodiment of a portable electronic device includes, but is not limited to, a portable electronic device equipped with IOS, Android, Microsoft, or another operating system. The preceding portable electronic device may also be another portable electronic device, for example, a laptop having a touch-sensitive surface (such as a touch panel). It is also to be understood that in some other embodiments of the present application, the electronic device 300 may not be a portable electronic device, but may be a desktop computer equipped with a touch-sensitive surface (such as a touch panel).

In another aspect, the present application further provides a non-transitory computer-readable storage medium for storing computer instructions. When the computer instructions are executed by a processor, the flocculation control method based on agglomeration theory provided in any preceding embodiment is performed. The flocculation control method includes the following.

The feed volumetric concentration of a thickener and the liquid phase viscosity of the thickener are acquired, and a ratio of the volume of flocs containing bound water to the volume of all flocs is determined based on the feed volumetric concentration.

The current floc settling velocity in the thickener is determined based on the feed volumetric concentration, the ratio of the volume of the flocs containing bound water to the volume of all the flocs, and the liquid phase viscosity.

The target floc settling velocity is determined based on the feed volumetric concentration, the underflow volumetric concentration of the thickener, and the solid flux per unit area per unit time.

In response to the current floc settling velocity being less than N times the target floc settling velocity, the feed volumetric concentration of the thickener, the additive amount of a flocculant, or the agitation rate is adjusted to adjust the floc settling velocity to be more than N times the target floc settling velocity, where N > 1.

Those skilled in the art may understand that all or part of the process of implementing the flocculation control method of the preceding embodiments may be completed by instructing related hardware through computer instructions. The instructions may be stored in a computer-readable storage medium. The computer-readable storage medium may be, for example, a magnetic disk, an optical disk, a read-only memory, or a random access memory.

The above describes a flocculation control method and apparatus based on agglomeration theory, an electronic device, and a medium provided in the present application in detail. The principles and embodiments of the present application are described herein with specific embodiments. The description of the preceding embodiments is merely for assisting in understanding the flocculation control method of the present application and its core ideas. At the same time, for those skilled in the art, according to the idea of the present application, there will be changes in specific embodiments and applications. In summary, the content of this specification should not be construed as limiting the present application.

**Claims**

1. A flocculation control method based on agglomeration theory, comprising:

   acquiring feed volumetric concentration of a thickener and liquid phase viscosity of the thickener, and determining a ratio of a volume of flocs containing bound water to a volume of all flocs based on the feed volumetric concentration;
   determining current floc settling velocity in the thickener based on the feed volumetric concentration, the ratio of the volume of the flocs containing bound water to the volume of all the flocs, and the liquid phase viscosity;
   determining target floc settling velocity based on the feed volumetric concentration, underflow volumetric concentration of the thickener, and solid flux per unit area per unit time; and
   in response to the current floc settling velocity being less than N times the target floc settling velocity, adjusting the feed volumetric concentration of the thickener, an additive amount of a flocculant, or an agitation rate to adjust the floc settling velocity to be more than N times the target floc settling velocity, wherein N > 1.

2. The flocculation control method according to claim 1, wherein determining the ratio of the volume of the flocs containing bound water to the volume of all the flocs based on the feed volumetric concentration comprises:

   substituting the feed volumetric concentration into a preset quadratic fitting polynomial to obtain the ratio of the volume of the flocs containing bound water to the volume of all the flocs,
   wherein an independent variable in the quadratic fitting polynomial is the feed volumetric concentration, and a dependent variable is the ratio of the volume of the flocs containing bound water to the volume of all the flocs.

3. The flocculation control method according to claim 1, wherein determining the current floc settling velocity in the thickener based on the feed volumetric concentration, the ratio of the volume of the flocs containing bound water to the volume of all the flocs, and the liquid phase viscosity comprises:
   determining the current floc settling velocity in the thickener based on the feed volumetric concentration, the ratio of the volume of the flocs containing bound water to the volume of all the flocs, the liquid phase viscosity, a floc density, and a floc characteristic diameter.

4. The flocculation control method according to claim 3, wherein a calculation formula of the current floc settling velocity in the thickener is as follows:

$$v_s = (1 - \gamma C_1)^{\frac{\gamma-3}{\gamma^2}} \frac{(\rho_2 - \rho_1)}{18\eta} g d^2,$$

wherein $\rho_2$ denotes the floc density, $\rho_1$ denotes density of a liquid phase, $d$ denotes the floc characteristic diameter, $\eta$ denotes the liquid phase viscosity, g denotes acceleration of gravity, $v_s$ denotes the current floc settling velocity in the thickener, $\gamma$ denotes the ratio of the volume of the flocs containing bound water to the volume of all the flocs, and $C_1$ denotes the feed volumetric concentration.

5. The flocculation control method according to claim 1, wherein a calculation formula of the target floc settling velocity is as follows:

$$v_n = (\frac{1}{C_1} - \frac{1}{C_2})Q,$$

wherein Q denotes the solid flux per unit area per unit time, $C_1$ denotes the feed volumetric concentration, $C_2$ denotes the underflow volumetric concentration, and $v_n$ denotes the target floc settling velocity.

6. The flocculation control method according to any one of claims 1 to 5, wherein in response to the current floc settling velocity being less than N times the target floc settling velocity, adjusting the feed volumetric concentration of the thickener, the additive amount of the flocculant, or the agitation rate comprises:
in response to the underflow volumetric concentration being greater than target underflow volumetric concentration and the current floc settling velocity being less than N times the target floc settling velocity, performing an adjustment of reducing the feed volumetric concentration, increasing the additive amount of the flocculant, or increasing the agitation rate on the thickener.

7. The flocculation control method according to claim 6, wherein in response to the current floc settling velocity being less than N times the target floc settling velocity, adjusting the feed volumetric concentration of the thickener, the additive amount of the flocculant, or the agitation rate comprises:
in response to the underflow volumetric concentration being less than or equal to the target underflow volumetric concentration and the current floc settling velocity being less than N times the target floc settling velocity, performing an adjustment of increasing the additive amount of the flocculant or increasing the agitation rate on the thickener.

8. A flocculation control apparatus, comprising:

a flocculant dosage calculation module configured to acquire feed volumetric concentration of a thickener and liquid phase viscosity of the thickener and determine a ratio of a volume of flocs containing bound water to a volume of all flocs based on the feed volumetric concentration;
a floc settling velocity calculation module configured to determine current floc settling velocity in the thickener based on the feed volumetric concentration, the ratio of the volume of the flocs containing bound water to the volume of all the flocs, and the liquid phase viscosity;
a target floc settling velocity determination module configured to determine target floc settling velocity based on the feed volumetric concentration, underflow volumetric concentration of the thickener, and solid flux per unit area per unit time; and
a parameter adjustment module configured to, in response to the current floc settling velocity being less than N times the target floc settling velocity, adjust the feed volumetric concentration of the thickener, an additive amount of a flocculant, or an agitation rate to adjust the floc settling velocity to be more than N times the target floc settling velocity, wherein N > 1.

9. An electronic device, comprising a memory and a processor, wherein

the memory is configured to store instructions; and
the processor is coupled with the memory and configured to execute the instructions stored in the memory to perform steps of the flocculation control method based on agglomeration theory according to any one of claims 1 to 7.

10. A non-transitory computer-readable storage medium for storing computer instructions, wherein when the computer instructions are executed by a processor, steps of the flocculation control method based on agglomeration theory according to any one of claims 1 to 7 are performed.

Acquire the feed volumetric concentration of a thickener and the liquid phase viscosity of the thickener, and determine a ratio of the volume of flocs containing bound water to the volume of all flocs based on the feed volumetric concentration — S101

Determine the current floc settling velocity in the thickener based on the feed volumetric concentration, the ratio of the volume of the flocs containing bound water to the volume of all the flocs, and the liquid phase viscosity — S102

Determine target floc settling velocity based on the feed volumetric concentration, the underflow volumetric concentration of the thickener, and the solid flux per unit area per unit time — S103

In response to the current floc settling velocity less than N times the target settling velocity, adjust the feed volumetric concentration of the thickener, the additive amount of a flocculant, or the agitation rate to adjust the floc settling velocity to be more than N times the target settling velocity — S104

**FIG. 1**

200

Flocculant dosage calculation module — 201

Floc settling velocity calculation module — 202

Target settling velocity determination module — 203

Parameter adjustment module — 204

Flocculation Control apparatus

**FIG. 2**

**FIG. 3**

**TRANSLATION**

## INTERNATIONAL SEARCH REPORT

International application No.

**PCT/CN2024/122775**

| A. | CLASSIFICATION OF SUBJECT MATTER |
|---|---|

B01D21/32(2006.01)i; B01D21/01(2006.01)i; C02F1/52(2023.01)i

According to International Patent Classification (IPC) or to both national classification and IPC

| B. | FIELDS SEARCHED |
|---|---|

Minimum documentation searched (classification system followed by classification symbols)

IPC: B01D21, C02F1

Documentation searched other than minimum documentation to the extent that such documents are included in the fields searched

Electronic data base consulted during the international search (name of data base and, where practicable, search terms used)

CNKI, CJFD, CNTXT, ENTXT, ENTXTC, VEN: 格林美, 格林爱科, ESG新能源, 青美邦新能源, 絮凝, 团聚, 沉速, 沉降, 速度, 调节, 控制, 浓度, 粘度, flocculat+, agglomerat+, settl+, sediment+, speed, regulat+, control+, concentration, viscosity

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2022161433 A (TOSHIBA CORP. et al.) 21 October 2022 (2022-10-21) claims 1-8, description, paragraphs [0012]-[0049], and figure 1 | 1-10 |
| A | JP 2024053398 A (TOSHIBA CORP. et al.) 15 April 2024 (2024-04-15) entire document | 1-10 |
| A | KR 20180132273 A (AQUATECH et al.) 12 December 2018 (2018-12-12) entire document | 1-10 |
| A | CN 116040769 A (SHENZHEN WATER (GROUP) CO., LTD.) 02 May 2023 (2023-05-02) entire document | 1-10 |
| A | CN 117836047 A (QINGMEIBANG NEW ENERGY MATERIALS CO., LTD. et al.) 05 April 2024 (2024-04-05) entire document | 1-10 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 December 2024** | **16 January 2025** |

| Name and mailing address of the ISA/CN | Authorized officer |
|---|---|
| **China National Intellectual Property Administration (ISA/CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/122775**

| Patent document cited in search report | | | Publication date (day/month/year) | Patent family member(s) | | | Publication date (day/month/year) |
|---|---|---|---|---|---|---|---|
| JP | 2022161433 | A | 21 October 2022 | JP | 7585125 | B2 | 18 November 2024 |
| JP | 2024053398 | A | 15 April 2024 | None | | | |
| KR | 20180132273 | A | 12 December 2018 | KR | 101930250 | B1 | 10 April 2019 |
| CN | 116040769 | A | 02 May 2023 | None | | | |
| CN | 117836047 | A | 05 April 2024 | None | | | |

Form PCT/ISA/210 (patent family annex) (July 2022)